# EUROPEAN PATENT APPLICATION

(11) **EP 3 001 496 A1**
(43) Date of publication of application: **30.03.2016**
(21) Application number: 14801164.6
(22) Date of filing: 21.05.2014
(51) Int. Cl.: H01M 10/058, H01M 4/485, H01M 4/505, H01M 4/525, H01M 4/58, H01M 10/0525, H01M 10/0567, H01M 10/0569

(54) **METHOD FOR MANUFACTURING NON-AQUEOUS ELECTROLYTE SECONDARY BATTERY**

(30) Priority: 22.05.2013 JP 2013107613; 05.09.2013 JP 2013183742
(71) Applicant: Ishihara Sangyo Kaisha, Ltd., Osaka-shi, Osaka 550-0002 (JP)
(72) Inventor: AKAGAWA, Kazuhiro, Yokkaichi-shi Mie 510-0842 (JP); KUMASHIRO, Yoshimasa, Yokkaichi-shi Mie 510-0842 (JP); KOSHIBA, Nobuharu, Yokkaichi-shi Mie 510-0842 (JP)
(74) Representative: Dantz, Jan Henning
(86) International application number: PCT/JP2014/063483
(87) International publication number: WO 2014/189082

(57) **Abstract**

An opening of a packaging member containing a positive electrode, a negative electrode, and a non-aqueous electrolyte solution is temporarily sealed to produce a temporarily sealed battery. The temporarily sealed battery is initially charged so that a negative electrode potential becomes higher than 0.8 V and 1.4 V or lower (versus Li/Li⁺), and is stored in an atmosphere of 50°C or higher and lower than 80°C. Thereafter, gas is discharged from the temporarily sealed battery, and the temporarily sealed battery is finally sealed to produce a non-aqueous electrolyte secondary battery. Lithium titanate with a spinel structure, lithium titanate with a ramsdellite structure, Li₄₊ₓTi₅O₁₂, Li₂₊ₓTi₃O₇, a titanic acid compound given by the general formula H₂TiₙO₂ₙ₊₁, or a monoclinic titanium composite oxide such as a bronze titanium oxide may be used as the titanium composite oxide.

## Description

### Technical Field

The present invention relates to methods for manufacturing a non-aqueous electrolyte secondary battery. More particularly, the present invention relates to a method for manufacturing a non-aqueous electrolyte secondary battery using a titanium composite oxide as a negative electrode active material, which reduces generation of gas associated with the use of the battery under high temperature environment and reduces capacity deterioration of the battery.

### Background Art

In recent years, non-aqueous electrolyte secondary batteries using a titanium composite oxide as a negative electrode active material have been developed. In titanium composite oxides having a lithium storage potential of 1.2 V or higher (versus Li/Li⁺), a metal Li is essentially less likely to be deposited due to a significant difference between the Li storage potential and a metal Li deposition potential, even if the battery is rapidly charged or is charged at a low temperature. For example, Li₄Ti₅O₁₂ is structurally degraded very slowly because its unit crystal lattice hardly changes with charge and discharge of the battery. Accordingly, batteries using a titanium composite oxide as a negative electrode active material have high safety and have excellent battery properties, especially excellent cycle life properties.

However, when the batteries using a titanium composite oxide as a negative electrode active material are charged and discharged under high temperature environment, there are problems that gas tends to be generated and battery capacity is also reduced. There are problems that generation of a large amount of gas may cause an increase in internal pressure or swelling of the batteries. There are problems that generation of a large amount of gas also accelerates capacity deterioration of the battery and reduces life properties. In particular, with the expanding applications of secondary batteries in recent years, there is a growing demand for batteries with higher energy density. In response to the demand, efforts have been made to arrange more densely electrodes in the batteries and to reduce space in the batteries. Such problems as described above are therefore becoming more significant.

Various solutions using conditioning of the batteries have been proposed to the problems. For example, Patent Literature 1 discloses a method for manufacturing a non-aqueous electrolyte battery including a negative electrode having a negative electrode active material in which lithium ions are inserted and desorbed at a potential equal to or higher than 1.2 V versus a lithium potential. This method is characterized in that a negative electrode potential is reduced to 0.8 V or less versus the lithium potential in an initial cycle so that a coating film having a carbonate structure is present on the surface of the negative electrode. Patent Literature 1 describes that this method reduces generation of gas in the non-aqueous electrolyte battery. This method is effective in reducing generation of gas when the battery is manufactured or when the battery is left at room temperature. However, it has been found that the initial battery capacity is significantly reduced by the above process, or generation of gas is not sufficiently reduced if the battery is repeatedly charged and discharged under high temperature environment.

Patent Literature 2 discloses a method in which a current is supplied to an activated lithium titanate-based electrochemical cell during a first period in order to charge the electrochemical cell to a first charge state, and the electrochemical cell is further charged to a second charge state in a temperature range of 40°C to 120°C during a second period. Patent Literature 2 describes that this method allows the electrochemical cell to have an increased cycle life, improved self-discharge properties, etc. In this method, however, it has been found that the initial battery capacity is significantly reduced by the above process probably because the voltage is maintained at a relatively high temperature during the second period.

Patent Literature 3 discloses a method for manufacturing a non-aqueous electrolyte secondary battery including a lithium titanium oxide in a negative electrode. The method includes adjusting the state of charge (SOC) of a temporarily sealed secondary battery to less than 20% (not including 0%), retaining the adjusted temporarily sealed secondary battery in an atmosphere of 50°C to 90°C, and opening the temporarily sealed secondary battery to discharge gas therefrom. Patent Literature 3 describes that this method reduces generation of gas during storage of the battery at a high temperature, and reduces an increase in resistance. This method is effective in reducing generation of gas when the battery is stored under high temperature environment with SOC as low as 50% or less. However, it has been found that generation of gas is not sufficiently reduced when the battery is repeatedly charged and discharged under high temperature environment.

Patent Literature 4 discloses a method for manufacturing a non-aqueous electrolyte secondary battery, in which an operation of charging the battery sealed by temporary sealing is performed, and the battery is then opened to discharge gas under a reduced pressure. Thereafter, the battery is sealed again by temporary sealing, and is aged under high temperature environment. The battery is then opened again to discharge gas under a reduced pressure. Subsequently, the battery is sealed by final sealing. Patent Literature 4 describes that, in this method, gas generated during the initial charge and discharge and gas generated during the aging period are discharged, so that predetermined battery capacity and output can be ensured. However, generation of gas is not sufficiently reduced in the case where an active material containing a titanium composite oxide having a lithium ion storage potential of 1.2 V or higher (versus Li/Li⁺) is used in a negative electrode and the battery is repeatedly charged and discharged under high temperature environment. This method is therefore not effective in this case.

### Citation List

### Patent Literatures

PTL 1: Re-publication of PCT International Publication No. WO2007/064046
PTL 2: Japanese Translation of PCT International Application No. 2010-530122
PTL 3: Japanese Unexamined Patent Application Publication No. 2012-79561
PTL 4: Japanese Unexamined Patent Application Publication No. 2008-27741

### Summary of Invention

### Technical Problem

It is an object of the present invention to provide a method for manufacturing a non-aqueous electrolyte secondary battery using a titanium composite oxide as a negative electrode active material, which reduces generation of gas associated with the use of the battery under high temperature environment, in particular, associated with repeated charge and discharge under high temperature environment (high temperature cycling), and reduces capacity deterioration of the battery.

### Solution to Problem

The inventors intensively studied a manufacturing method (initial conditioning method) of a non-aqueous electrolyte secondary battery using a titanium composite oxide as a negative electrode active material. As a result, the inventors found that the above problems can be solved by initially charging a temporarily sealed battery so that a negative electrode potential falls in a specific range, storing the temporarily sealed battery in a specific environment, and then discharging gas from the temporarily sealed battery.

(1) That is, according to the present invention, a method for manufacturing a non-aqueous electrolyte secondary battery including a positive electrode, a negative electrode that includes an active material containing a titanium composite oxide having a lithium ion storage potential of 1.2 V or higher (versus Li/Li⁺), and a non-aqueous electrolyte solution includes the steps of: temporarily sealing an opening of a packaging member containing the positive electrode, the negative electrode, and the non-aqueous electrolyte solution to produce a temporarily sealed secondary battery; adjusting a negative electrode potential of the temporarily sealed secondary battery to a potential higher than 0.8 V and equal to or lower than 1.4 V (versus Li/Li⁺) and storing the temporarily sealed secondary battery in an atmosphere of 50°C or higher and lower than 80°C; and opening the temporarily sealed secondary battery to discharge gas therefrom, and then finally sealing the packaging member.
(2) In the method according to (1), the storage of the temporarily sealed secondary battery is performed in an open circuit.
(3) In the method according to (1) or (2), the titanium composite oxide is selected from lithium titanate with a spinel structure, lithium titanate with a ramsdellite structure, and a monoclinic titanium composite oxide.
(4) In the method according to any one of (1) to (3), the titanium composite oxide is selected from Li₄₊ₓTi₅O₁₂, Li₂₊ₓTi₃O₇, a titanic acid compound given by a general formula H₂TiₙO₂ₙ₊₁, and bronze titanium oxide (where 0≤ x ≤ 3 and n is an even number of 4 or more).
(5) In the method according to any one of (1) to (4), capacity of the temporarily sealed secondary battery is regulated by the negative electrode when the negative electrode potential is adjusted.
(6) In the method according to any one of (1) to (5), the non-aqueous electrolyte solution contains ethylene carbonate as a solvent and/or at least one selected from vinylene carbonate, 1,3-propanesultone, and ethylene sulfite as an additive.
(7) In the method according to any one of (1) to (6), an active material of the positive electrode is lithium iron phosphate.
(8) In the method according to (7), a cell voltage of the temporarily sealed secondary battery is adjusted to 2.1 to 2.7 V.
(9) In the method according to any one of (1) to (6), an active material of the positive electrode is a lithium manganese composite oxide with a spinel structure.
(10) In the method according to (9), a cell voltage of the temporarily sealed secondary battery is adjusted to 2.8 to 3.4 V.
(11) In the method according to any one of (1) to (6), an active material of the positive electrode is a lithium nickel manganese cobalt composite oxide.
(12) In the method according to (11), a cell voltage of the temporarily sealed secondary battery is adjusted to 2.7 to 3.3 V.
(13) A non-aqueous electrolyte secondary battery manufactured by the method according to any one of (1) to (12).

### Advantageous Effects of Invention

The method for manufacturing a non-aqueous electrolyte secondary battery according to the present invention produces a non-aqueous electrolyte secondary battery capable of reducing generation of gas associated with the use of the battery under high temperature environment, and reducing capacity deterioration of the battery.

### Brief Description of Drawings

[Fig. 1] Fig. 1 is a plan view showing a non-aqueous electrolyte secondary battery according to an embodiment of the present invention.
[Fig. 2] Fig. 2 is a sectional view showing the non-aqueous electrolyte secondary battery according to the embodiment of the present invention.

### Description of Embodiments

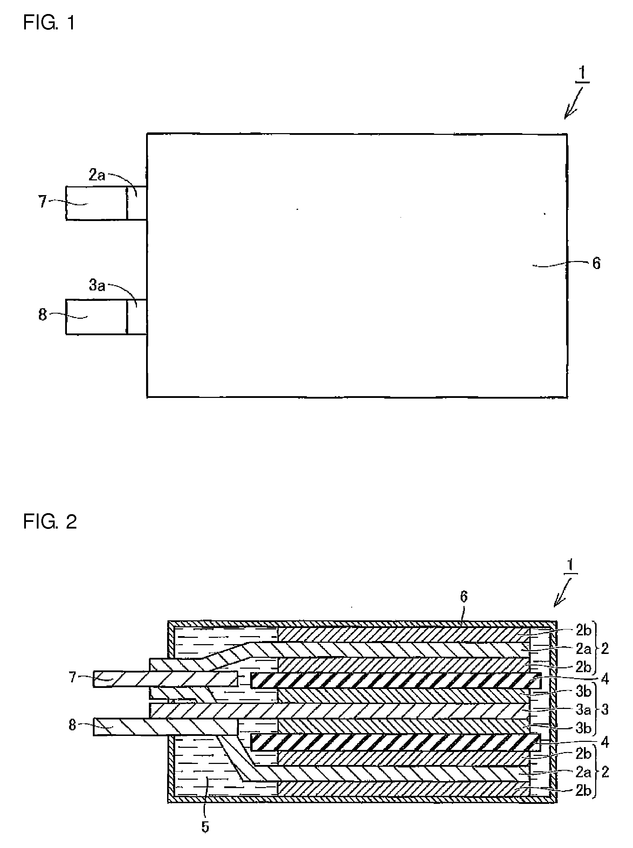

A non-aqueous electrolyte secondary battery 1 to which a manufacturing method of the present invention can be applied has a positive electrode 2, a negative electrode 3 that include an active material containing a titanium composite oxide, a separator 4, a non-aqueous electrolyte solution 5, and a packaging member 6, as shown in Figs. 1 and 2.

The positive electrode 2 includes at least a positive electrode current collector 2a and a positive electrode active material layer 2b. The positive electrode active material layer is formed on one or both surfaces of the positive electrode current collector. The positive electrode active material layer contains at least a positive electrode active material and may contain a conductive material, a binder, or other material as necessary. For example, aluminum or an aluminum alloy can be used for the positive electrode current collector.

A known electrode active material that can function as a positive electrode for the titanium composite oxide used as a negative electrode active material can be used as the positive electrode active material. Specifically, any electrode active material having a lithium ion storage potential of 1.6 V or higher (versus Li/Li⁺), and more preferably 2.0 V or higher (versus Li/Li⁺), can be used as the positive electrode active material. Various oxides and sulfides can be used as such an active material. Examples of such oxides and sulfides include manganese dioxide (MnO₂), iron oxide, copper oxide, nickel oxide, a lithium manganese composite oxide (e.g., LiₓMn₂O₄ or LiₓMnO₂), a lithium nickel composite oxide (e.g., LiₓNiO₂), a lithium cobalt composite oxide (LiₓCoO₂), a lithium nickel cobalt composite oxide (e.g., LiₓNi_{1-y}Co_{y}O₂), a lithium manganese cobalt composite oxide (LiₓMn_{y}Co_{1-y}O₂), a lithium nickel manganese cobalt composite oxide (LiₓNi_{y}Mn_{z}Co_{1-y-z}O₂), a lithium manganese nickel composite oxide with a spinel structure (LiₓMn_{2-y}Ni_{y}O₄), a lithium phosphorus oxide with an olivine structure (LiₓFePO₄, LiₓFe_{1-y}Mn_{y}PO₄, LiₓCoPO₄, LiₓMnPO₄, etc.), a lithium silicon oxide (Li₂ₓFeSiO₄ etc.), iron sulfate (Fe₂(SO₄)₃), vanadium oxide (e.g., V₂O₅), and a solid solution composite oxide given by xLi₂MO₃·(1-x)LiM'O₂ (where M and M' represent one or more metals of the same or different kinds). These materials may be mixed as desired. In the above chemical formulas, it is preferable that x, y, and z be in the range of 0 to 1.

Organic and inorganic materials such as a conductive polymer material like polyaniline and polypyrrole, a disulfide polymer material, sulfur (S), and fluorocarbon, etc. may be used.

Among the above positive electrode active materials, it is preferable to use an active material having a high lithium ion storage potential. For example, a lithium manganese composite oxide with a spinel structure (LiₓMn₂O₄), a lithium nickel composite oxide (LiₓNiO₂), a lithium cobalt composite oxide (LiₓCoO₂), a lithium nickel cobalt composite oxide (LiₓNi_{1-y}Co_{y}O₂), a lithium manganese cobalt composite oxide (LiₓMn_{y}Co_{1-y}O₂), a lithium nickel manganese cobalt composite oxide (LiₓNi_{y}Mn_{z}Co_{1-y-z}O₂), a lithium manganese nickel composite oxide with a spinel structure (LiₓMn_{2-y}Ni_{y}O₄), lithium iron phosphate (LiₓFePO₄), etc. are preferably used, and in particular, a lithium manganese composite oxide with a spinel structure, lithium iron phosphate, and a lithium nickel manganese cobalt composite oxide are preferably used. In the above chemical formulas, it is preferable that x, y, and z be in the range of 0 to 1.

For example, acetylene black, carbon black, graphite, etc. can be used as the conductive material.

For example, polytetrafluoroethylene (PTFE), polyvinylidene fluoride (PVdF), fluororubber, styrene-butadiene rubber (SBR), carboxymethyl cellulose (CMC), etc. can be used as the binder.

Other materials that can be contained in the positive electrode active material layer include various additives. For example, a dinitrile compound, fluoroethylene carbonate, vinylene carbonate, 1,3-propanesultone, ethylene sulfite, etc. can be used.

It is preferable that the positive electrode active material layer contain 80 to 95 wt% of the positive electrode active material, 3 to 18 wt% of the conductive material, and 2 to 10 wt% of the binder.

The positive electrode can be produced by suspending the positive electrode active material, the conductive material, and the binder in an appropriate solvent to prepare slurry, coating one or both surfaces of the current collector with the slurry, and drying the slurry.

As shown in Fig. 2, the negative electrode 3 includes at least a negative electrode current collector 3a and a negative electrode active material layer 3b. The negative electrode active material layer is formed on one or both surfaces of the negative electrode current collector. The negative electrode active material layer contains at least a negative electrode active material and may contain a conductive material, a binder, or other material as necessary. For example, aluminum or an aluminum alloy, or copper or a copper alloy can be used for the negative electrode current collector.

A titanium composite oxide is used as the negative electrode active material. In particular, it is preferable to use a titanium composite oxide having a lithium ion storage potential of 1.2 V or higher (versus Li/Li⁺). Examples of such an active material include lithium titanate with a spinel structure (Li₄₊ₓTi₅O₁₂ (0 ≤ x ≤ 3), storage potential: 1.55 V versus Li/Li⁺), lithium titanate with a ramsdellite structure (Li₂₊ₓTi₃O₇ (0 ≤ x ≤ 3), storage potential: 1.6 V versus Li/Li⁺), and a monoclinic titanium composite oxide. Examples of the monoclinic titanium composite oxide include a titanic acid compound given by the general formula H₂TiₙO₂ₙ₊₁ (where n is an even number of 4 or more, e.g., H₂Ti₁₂O₂₅, storage potential: 1.55 V versus Li/Li⁺), bronze titanium oxide (TiO₂(B), storage potential: 1.6VversusLi/Li⁺), lithium hydrogen titanate given by the general formula H₂₋ₓLiₓTiₙO₂ₙ₊₁ (where n is an even number of 4 or more and 0 < x < 2, e.g., H₂₋ₓLiₓTi₁₂O₂₅), and lithium titanate given by the general formula Li₂TiₙO₂ₙ₊₁ (where n is an even number of 4 or more, e.g., Li₂Ti₁₈O₃₇ etc.). In these chemical formulas, a part of lithium, hydrogen, titanium, and oxygen may be replaced with other element(s), and these titanium composite oxides may be titanium composite oxides with stoichiometric compositions. These titanium composite oxides are not limited to titanium composite oxides with stoichiometric compositions, or may be titanium composite oxides with non-stoichiometric compositions having a deficit or excess of a part of elements. One of these titanium composite oxides may be used alone, or a mixture of two or more of the titanium composite oxides may be used. Alternatively, titanium oxide (e.g., TiO₂) that changes to a lithium titanium composite oxide by charge and discharge may be used as the active material. These materials may be mixed as desired. The upper limit of the lithium ion storage potential of the titanium composite oxide is preferably, but not limited to, 2 V. Although the negative electrode may include a known negative electrode active material other than the titanium composite oxide, the capacity of the titanium composite oxide preferably accounts for 50% or more of the negative electrode capacity, and more preferably 80% or more of the negative electrode capacity.

It is preferable to use as the titanium composite oxide a titanium composite oxide selected from Li₄₊ₓTi₅O₁₂, Li₂₊ₓTi₃O₇, the titanium composite oxide given by the general formula H₂TiₙO₂ₙ₊₁, and the bronze titanium oxide (where x is a real number that satisfies 0 ≤ x ≤ 3, and n is an even number of 4 or more).

As used herein, the "lithium ion storage potential (versus Li/Li⁺)" refers to a potential corresponding to the midpoint of capacity in a potential-capacity curve for charging. This potential-capacity curve is obtained by capacity measurement in which a coin cell using lithium metal foil as a counter electrode is charged with a constant current at 0.25C in a 25°C environment until the cell voltage reaches 1.0 V and is then discharged with a constant current at 0.25C in the 25°C environment until the cell voltage reaches 3.0 V.

It is preferable that the titanium composite oxide has an average primary particle size of 2 µm or less. The titanium composite oxide having an average primary particle size of 2 µm or less has a sufficient effective area that contributes to an electrode reaction, and thus provides satisfactory large current discharge properties. The average primary particle size can be obtained as an average of the particle sizes of 100 primary particles measured with an electron scanning microscope. The primary particles may be granulated using a known method to form secondary particles. It is preferable that the average secondary particle size be 0.1 to 30 µm. The average secondary particle size can be obtained by a laser diffraction/scattering method.

It is preferable that the titanium composite oxide has a specific surface area of 1 to 15 m²/g. The titanium composite oxide having a specific surface area of 1 m²/g or more has a sufficient effective area that contributes to an electrode reaction, and thus provides satisfactory large current discharge properties. The titanium composite oxide having a specific surface area of 15 m²/g or less reduces a reaction with a non-aqueous electrolyte, and further reduces the deterioration in charge and discharge efficiency or the amount of generation of gas during storage of the battery. The specific surface area can be obtained by a single-point BET method using nitrogen adsorption.

The conductive material is used to make the negative electrode conductive. Any conductive material that does not cause a chemical change in a battery to be configured can be used as the conductive material. Examples of such a conductive material include conductive materials containing a carbon material like natural graphite, artificial graphite, carbon black, acetylene black, ketjen black, or carbon fibers, a metal material like metal powder or metal fibers such as copper, nickel, aluminum, or silver, etc. , a conductive polymer such as a polyphenylene derivative, or a mixture thereof.

For example, polytetrafluoroethylene (PTFE), polyvinylidene fluoride (PVdF), fluororubber, styrene-butadiene rubber (SBR), carboxymethyl cellulose (CMC), etc. can be used as the binder.

It is preferable that the negative electrode active material layer contain 70 to 95 wt% of the negative electrode active material, 0 to 25 wt% of the conductive material, and 2 to 10 wt% of the binder.

The negative electrode can be produced by suspending the negative electrode active material, the conductive material, and the binder in an appropriate solvent to prepare slurry, coating one or both surfaces of the current collector with the slurry, and drying the coating.

The separator is placed between the positive electrode and the negative electrode to prevent the positive and negative electrodes from contacting each other. The separator is made of an insulating material. The separator is shaped so as to allow an electrolyte to move between the positive and negative electrodes.

Examples of the separator include a synthetic resin nonwoven fabric, a porous polyethylene film, a porous polypropylene film, and a cellulose-based separator.

A liquid non-aqueous electrolyte (non-aqueous electrolyte solution) that is prepared by dissolving an electrolyte in a non-aqueous solvent can be used as the non-aqueous electrolyte.

A non-aqueous organic solvent as the non-aqueous solvent serves as a medium in which ions involved in an electrochemical reaction of a lithium battery can move. Examples of such a non-aqueous organic solvent include a carbonate solvent, an ester solvent, an ether solvent, a ketone solvent, an alcohol solvent, and an aprotic solvent.

Dimethyl carbonate (DMC), diethyl carbonate (DEC), dipropyl carbonate (DPC), methyl propyl carbonate (MPC), ethyl propyl carbonate (EPC), ethyl methyl carbonate (EMC), ethylene carbonate (EC), propylene carbonate (PC), butylene carbonate (BC), etc. can be used as the carbonate solvent.

Methyl acetate, ethyl acetate, n-propyl acetate, dimethyl acetate, methyl propionate, ethyl propionate, γ-butyrolactone (GBL), decanolide, valerolactone, mevalonolactone, caprolactone, etc. can be used as the ester solvent.

Dibutyl ether, tetraglyme, diglyme, dimethoxyethane, 2-methyltetrahydrofuran, tetrahydrofuran, etc. can be used as the ether solvent.

Cyclohexanone etc. can be used as the ketone solvent.

Ethyl alcohol, isopropyl alcohol, etc. can be used as the alcohol solvent.

Nitriles such as R-CN (where R represents a C2 to C20 linear, branched, or cyclic hydrocarbon group, and may include a double bond, an aromatic ring, or an ether bond), amides such as dimethylformamide, dioxolanes such as 1,3-dioxolane, sulfolanes, etc. can be used as the aprotic solvent.

The non-aqueous organic solvent may consist of a single material or may be a mixture of two or more solvents. In the case where the non-aqueous organic solvent is a mixture of two or more solvents, the mixing ratio of the two or more solvents is appropriately adjusted according to battery performance. For example, a non-aqueous solvent mainly containing a cyclic carbonate such as EC and PC or mainly containing a mixed solvent of a cyclic carbonate and a non-aqueous solvent having lower viscosity than the cyclic carbonate, etc. can be used.

An alkali salt can be used as the electrolyte. Preferably, a lithium salt is used as the electrolyte. Examples of the lithium salt include lithium hexafluorophosphate (LiPF₆), lithium tetrafluoroborate (LiBF₄), lithium hexafluoroarsenate (LiAsF₆), lithium perchlorate (LiCl0₄), lithium bis(trifluoromethanesulfonyl)imide (LiN(CF₃SO₂)₂, LiTSFI), and lithium trifluoromethanesulfonate (LiCF₃SO₃). One of these lithium salts may be used alone, or a mixture of two or more of the lithium salts may be used. In particular, lithium hexafluorophosphate (LiPF₆), lithium tetrafluoroborate (LiBF₄), or a mixture thereof is preferred.

It is preferable that the concentration of the electrolyte in the non-aqueous solvent be 0.5 to 2.5 mol/l. The concentration of 0.5 mol/l or more reduces resistance of the electrolyte and improves charge and discharge properties. The concentration of 2.5 mol/l or less can reduces an increase in melting point or viscosity of the electrolyte and allows the electrolyte to be in a liquid form at normal temperature.

Regarding the solvent and the electrolyte, the materials listed above may be combined as appropriate. A specific example of the combination is a non-aqueous electrolyte solution produced by dissolving 1 mol/l of lithium hexafluorophosphate (LiPF₆) as an electrolyte in a mixed solvent of ethylene carbonate (EC) and dimethyl carbonate (DMC) (mixed at a volume ratio of 1:2).

Another example is a non-aqueous electrolyte solution containing at least three solvents, namely (a) ethylene carbonate, (b) cyclic carboxylic acid ester, or cyclic carbonate having four or more carbon atoms, and (c) chain carbonate, and containing at least lithium hexafluorophosphate and lithium tetrafluoroborate as lithium salts. In this non-aqueous electrolyte solution, the content of the solvent (a), namely ethylene carbonate, in the entire non-aqueous solvent is 5 to 20 vol%, and the concentration of lithium tetrafluoroborate in the non-aqueous electrolyte solution is 0.05 to 0.5 mol/l. The use of this electrolyte solution further reduces generation of gas associated with a high temperature cycling and capacity deterioration of the battery, and provides a non-aqueous electrolyte secondary battery having excellent low-temperature charge and discharge properties.

A known cyclic carboxylic acid ester solvent can be used as the cyclic carboxylic acid ester. Examples of the cyclic carboxylic acid ester include γ-butyrolactone (GBL), decanolide, valerolactone, mevalonolactone, and caprolactone.

A cyclic carbonate given by the chemical formula C₃XH₃O₃ (where X represents a hydrocarbon group, which is a functional group of carbon at the 3-position) can be used as the cyclic carbonate having four or more carbon atoms. In particular, X may be an alkyl group having one to three carbon atoms. Examples of such a material include propylene carbonate, butylene carbonate, and pentylene carbonate.

A known chain carbonate solvent can be used as the chain carbonate. A chain carbonate given by CₙH₂ₙ₊₁(COO)CₘH₂ₘ₊₁ (where m and n are integers of 1 to 3) can be used. Specific examples include ethyl methyl carbonate and diethyl carbonate.

In the non-aqueous electrolyte solution containing lithium tetrafluoroborate (LiBF₄) and ethylene carbonate (EC) in the above range, the mass ratio of lithium tetrafluoroborate to ethylene carbonate (LiBF₄/EC) may be 0.015 or more and 0.72 or less. This provides a non-aqueous electrolyte secondary battery having further improved high-temperature cycle properties and low-temperature charge and discharge properties. The mass ratio (LiBF₄/EC) may be 0.03 to 0.15.

The content of ethylene carbonate in the entire non-aqueous solvent may be 5 to 20 vol%, or may be 5 to 10 vol%. The concentration of lithium tetrafluoroborate in the non-aqueous electrolyte solution may be 0.05 to 0.5 mol/l, may be 0.05 to 0.3 mol/l, or may be 0.05 to 0.2 mol/l.

Both lithium tetrafluoroborate and ethylene carbonate are consumed as a coating film is formed on the surface of the negative electrode. The concentrations of lithium tetrafluoroborate and ethylene carbonate in the electrolyte solution should therefore gradually decrease after assembly of the battery. The electrolyte solution need only satisfy the above composition at least at the time of assembly of the battery. Lithium tetrafluoroborate and ethylene carbonate eventually may not be contained in the electrolyte solution as a result of use of the battery after assembly.

The content "a" (vol%) of (a) ethylene carbonate and the content "b" (vol%) of (b) cyclic carboxylic acid ester or cyclic carbonate having four or more carbon atoms in the non-aqueous solvent may satisfy b ≥ a. This increases lithium ion conductivity of the electrolyte solution at low temperatures and further improves low-temperature charge and discharge properties. The ratio b/a may be 1 to 9 or may be 3 to 7.

The contents "a," "b" and the content "c" (vol%) of (c) chain carbonate in the non-aqueous solvent may satisfy (a + b) ≤ c. This maintains high lithium ion conductivity of the electrolyte solution even in a very low temperature range and further improves low-temperature charge and discharge properties. The ratio c/(a + b) may be 1 to 9, may be 1 or more and less than 3, or may be 1.5 to 2.4.

The molar concentration of lithium hexafluorophosphate in the non-aqueous electrolyte solution may be 0.5 to 1.4 mol/l. This reduces the rate of decrease in capacity retention associated with a high temperature cycling and maintains high lithium ion conductivity of the electrolyte solution, and thus further improves low-temperature charge and discharge properties. The molar concentration of lithium hexafluorophosphate may be 0.8 to 1.4.

The lithium salts in the non-aqueous electrolyte solution may be only lithium hexafluorophosphate and lithium tetrafluoroborate, or the non-aqueous electrolyte solution may further contain any of the other lithium salts listed above.

The non-aqueous electrolyte solution may contain cyclic carbonate or cyclic carboxylic acid ester having a melting point of -30°C or less and a dielectric constant of 30 or more as the solvent (b), and chain carbonate having a melting point of -40°C or less as the solvent (c). Selecting such solvent species produces an electrolyte solution having excellent lithium ion conductivity even at low temperatures. For example, the melting point and the dielectric constant may be obtained by referring to "Lithium Ion Secondary Batteries: Materials and Applications" (Masaki YOSHIO, Nikkan Kogyo Shinbun Ltd., 1996). Those melting points and dielectric constants that are not shown therein are obtained by an alternating current impedance method. The use of the solvent (c) having viscosity of 0.5 to 0.8 mPa·s increases mobility of lithium ions. Viscosity is measured at 20°C by using an E type rotational viscometer according to JIS K 7117-2.

An example of such a solvent (b) is at least one selected from propylene carbonate (mp: -49°C, εᵣ: 65), butylene carbonate (mp: -53°C, εᵣ: 53), pentylene carbonate (mp: -45°C, εᵣ: 46), γ-butyrolactone (mp: -44°C, εᵣ: 39), and γ-valerolactone (mp: -31°C, εᵣ: 34). An example of such a solvent (c) is at least one selected from ethyl methyl carbonate (mp: -53°C, η₀: 0.65 mPa·s) and diethyl carbonate (mp: -43°C, η₀: 0.75 mPa·s). As used herein, mp represents a melting point, εᵣ represents a dielectric constant, and η₀ represents viscosity.

The electrolyte solution may further contain an additive that improves low-temperature properties etc. of the lithium battery. For example, a dinitrile compound, a carbonate material, or 1,3-propanesultone and ethylene sulfite can be used as the additive.

For example, the dinitrile compound may be any organic dinitrile compound. In particular, a dinitrile compound, namely a chain saturated hydrocarbon compound having nitrile groups bonded to both terminals thereof, which is given by the structural formula NC-(CH₂)ₙ-CN (where n≥ 1 and n is an integer), is preferable as this dinitrile compound easily dissolves in the electrolyte solution. In particular, in view of availability and cost, any of dinitrile compounds of n = about 1 to 10, namely any of malononitrile (n = 1), succinonitrile (n = 2), glutaronitrile (n = 3), adiponitrile (n = 4), pimelonitrile (n = 5), suberonitrile (n = 6), azelanitrile (n = 7), sebaconitrile (n = 8), undecanenitrile (n = 9), and dodecanenitrile (n= 10), is preferred, and malononitrile, succinonitrile, glutaronitrile, or adiponitrile is particularly preferred.

For example, the carbonate material may be selected from the group consisting of vinylene carbonate (VC), a vinylene carbonate derivative having one or more substituents selected from the group consisting of a halogen (e.g., -F, -Cl, -Br, -I, etc.), a cyano group (-CN), and a nitro group (-NO₂), and an ethylene carbonate derivative having one or more substituents selected from the group consisting of a halogen (e.g., -F, -Cl, -Br, -I, etc.), a cyano group (-CN), and a nitro group (-NO₂).

Either one material or a mixture of two or more materials may be used as the additive. Specifically, the electrolyte solution may further contain one or more additives selected from the group consisting of vinylene carbonate (VC), succinonitrile (SCN), fluoroethylene carbonate (FEC), 1,3-propanesultone, and ethylene sulfite.

It is preferable that the electrolyte solution contain at least one selected from ethylene carbonate (EC), vinylene carbonate (VC), succinonitrile (SCN), 1,3-propanesultone, and ethylene sulfite. These materials should serve to form a coating film on the titanium composite oxide of the negative electrode. This further enhances the effect of the present invention, namely further reduces generation of gas under high temperature environment.

It is preferable that the content of the additive be 10 parts by weight or less, and more preferably 0.1 to 10 parts by weight, per 100 parts by weight of the total amount of the non-aqueous organic solvent and the lithium salt. This content range improves temperature properties of the battery. The content of the additive is more preferably 1 to 5 parts by weight.

A known method can be used to measure the kinds and concentrations of solvent and lithium salt in the electrolyte solution. For example, gas chromatography mass spectroscopy can be used to analyze the solvent, and NMR can be used to analyze the solvent and the lithium salt.

The packaging member may be a laminated film or a metal container. A multilayer film made of metal foil covered with a resin film is used as the laminated film. A resin for the resin film may be a polymer such as polypropylene (PP), polyethylene (PE), nylon, or polyethylene terephthalate (PET). The inner surface of the packaging member made of the laminated film is comprised of a thermoplastic resin such as PP or PE.

It is preferable that the laminated film have a thickness of 0.2 mm or less.

A method for manufacturing a non-aqueous electrolyte secondary battery according to the present embodiment will be described below. This method includes the steps of placing the positive electrode, the negative electrode, and the non-aqueous electrolyte solution in the packaging member and temporarily sealing an opening of the packaging member to produce a temporarily sealed secondary battery; adjusting a negative electrode potential of the temporarily sealed secondary battery to a potential higher than 0.8 V and equal to or lower than 1.4 V (versus Li/Li⁺) and storing the temporarily sealed secondary battery in an atmosphere of 50°C or higher and lower than 80°C; opening the temporarily sealed secondary battery to discharge gas from the temporarily sealed secondary battery, and then finally sealing the packaging member.

The gas is released from the negative electrode and discharged from the battery during manufacturing of the battery. A non-aqueous electrolyte secondary battery with reduced generation of gas under high temperature environment can thus be produced.

### (First Step)

A temporarily sealed secondary battery is produced in the first step. An electrode group is first placed in the packaging member. The electrode group is formed by a positive electrode, a negative electrode, and a separator. Specifically, for example, a positive electrode, a separator, a negative electrode, and a separator are sequentially stacked on each other and the stack is wound into a flat shape to form a flat electrode group. In another method, for example, one or more sets of a positive electrode and a negative electrode may be stacked on each other with a separator between the positive and negative electrodes to form an electrode group. An insulating tape may be wound around the electrode group to fix the electrode group. The step of heating and/or vacuum drying the electrode group and each constituent member after and/or before formation of the electrode group to reduce adsorbed water may be added at this time.

As shown in Figs. 1 and 2, a belt-like positive electrode terminal 7 is electrically connected to the positive electrode 2. A belt-like negative electrode terminal 8 is electrically connected to the negative electrode 3. The positive and negative electrode terminals may be formed integrally with the positive and negative electrode current collectors, respectively. Alternatively, a terminal formed separately from the current collector may be connected to the current collector. The positive and negative electrode terminals may be respectively connected to the positive and negative electrodes before the stack is wound. Alternatively, the positive and negative electrode terminals may be respectively connected to the positive and negative electrodes after the stack is wound.

The packaging member made of a laminated film can be formed by bulging or deep drawing the laminated film from the thermoplastic resin film side to form a cup-shaped electrode group accommodating portion, and then bending the laminated film 180° with the thermoplastic resin film side facing inward so as to form a lid. For example, in the case where the packaging member is a metal container, the packaging member can be formed by drawing a metal sheet. An example of using the packaging member made of a laminated film will be described below as a representative example.

The electrode group is placed in the electrode group accommodating portion of the packaging member, and the positive and negative electrode terminals are extended to the outside of the container. Then, the upper end of the packaging member from which the positive and negative electrode terminals are extended to the outside and one of those ends of the packaging member which are perpendicular to the upper end are heat sealed to form a sealed portion. The packaging member having an opening along its one side is formed in this manner. The step of heating and/or vacuum drying each constituent member to reduce adsorbed water may be added at this time.

Subsequently, a non-aqueous electrolyte solution is introduced into the packaging member through the opening to impregnate the electrode group with the non-aqueous electrolyte solution. In order to facilitate impregnation of the electrode group with the electrolyte solution, the battery may be stored while being pressed in the thickness direction thereof, or the electrolyte solution may be introduced into the packaging member after the internal pressures of the electrodes are reduced.

Thereafter, the opening is heat sealed to form a temporarily sealed portion to produce the temporarily sealed secondary battery sealing the electrode group and a non-aqueous electrolyte therein (in the present embodiment, the non-aqueous electrolyte solution containing the non-aqueous electrolyte) with which the electrode group has been impregnated.

### (Second Step)

Subsequently, the second step is performed. A current is applied between the positive and negative electrode terminals of the temporarily sealed secondary battery to initially charge the temporarily sealed secondary battery so that the negative electrode potential becomes higher than 0.8 V and equal to or lower than 1.4 V (versus Li/Li⁺). It is more preferable to initially charge the temporarily sealed secondary battery so that the negative electrode potential becomes lower than the lithium ion storage potential of the negative electrode active material by 350 mV or more.

Water, carbon dioxide, etc. have been adsorbed on the surface of the titanium composite oxide as the negative electrode active material. These impurities tend to be released as gas if the negative electrode potential is made lower than the lithium ion storage potential, i.e., if the battery is further charged even after the SOC reaches 100%. In particular, initially charging the battery so that the negative electrode potential becomes equal to or lower than 1.4 V (versus Li/Li⁺) and storing the battery at a high temperature as described below facilitates desorption of the absorbed water, carbon dioxide, etc. and forms some sort of coating film on the surface of the negative electrode. It is preferable to initially charge the battery so that the negative electrode potential becomes equal to or lower than 1.2 V (versus Li/Li⁺), because this further reduces generation of gas associated with the use of the battery under high temperature environment and further reduces capacity deterioration of the battery.

It is not preferable to initially charge the battery so that the negative electrode potential becomes equal to or lower than 0.8 V (versus Li/Li⁺). This would excessively form a coating film, reducing discharge capacity of the battery. In the case of using Al for the negative electrode current collector, it is not preferable to reduce the negative electrode potential to 0.4 V or less (versus Li/Li⁺) because Al of the current collector forms an alloy with Li.

The period between production of the temporarily sealed secondary battery and initial charge is not particularly limited, and can be set to any period according to the production schedule etc. For example, this period may be an hour to a month. The initial charge of the battery and the storage of the battery at a high temperature described below are not limited to the first charge after production of the temporarily sealed secondary battery. The initial charge of the battery and the storage of the battery at a high temperature may be performed after the battery is charged and discharged several times, as long as the battery can be subsequently opened to discharge gas therefrom.

For example, the negative electrode potential can be adjusted by calculating in advance such an amount of charge electricity that the negative electrode potential becomes equal to a desired potential higher than 0.8 V and equal to or lower than 1.4 V (versus Li/Li⁺) in a cell of the same battery configuration by using reference electrodes, and charging the temporarily sealed battery with the calculated amount of electricity. Alternatively, the negative electrode potential can be adjusted by charging the cell of the same battery configuration under the same conditions until the negative electrode potential becomes equal to a desired potential higher than 0.8 V and equal to or lower than 1.4 V (versus Li/Li⁺) by using the reference electrodes, checking the cell voltage at this time, and using the checked cell voltage value as an initial charge cut-off voltage. Another method is as follows. A coin cell is produced by cutting out as a working electrode a positive electrode for a non-aqueous electrolyte secondary battery and using a counter electrode made of metal lithium foil and the same electrolyte solution and the same separator as those of the battery. This coin cell is charged under the same conditions of C rate and temperature as those for initial charge of the battery to obtain a charge curve with the ordinate representing the potential and the abscissa representing the capacity. For the negative electrode as well, a potential-capacity curve on the Li storage side including a desired negative electrode potential is obtained by a method according to the evaluation of the positive electrode by using as a working electrode a negative electrode cut out with the same dimensions as those for the evaluation of the positive electrode. The potential-capacity curves thus obtained for the positive and negative electrodes are superimposed on each other in a single graph. The potential of the positive electrode which corresponds to the capacity at the time the negative electrode reaches the desired negative electrode potential is read from this graph, and a cell voltage is obtained from the potential difference between the positive and negative electrodes. This cell voltage is used as an initial charge cut-off voltage.

In the case of using a lithium manganese composite oxide with a spinel structure as the positive active material, it is preferable to adjust the negative electrode potential of the temporarily sealed battery so that the cell voltage becomes equal to 2.8 to 3.4 V, and more preferably 3.0 to 3.4 V. In the case of using lithium iron phosphate as the positive active material, it is preferable to adjust the negative electrode potential of the temporarily sealed battery so that the cell voltage becomes equal to 2.1 to 2.7 V, and more preferably 2.3 to 2.7 V. In the case of using a lithium nickel manganese cobalt composite oxide as the positive active material, it is preferable to adjust the negative electrode potential of the temporarily sealed battery so that the cell voltage becomes equal to 2.7 to 3.3 V, and more preferably 2.9 to 3.3 V.

Although the temperature at which initial charge is carried out can be set as desired, this temperature is preferably about 20 to 45°C and may be normal temperature (20 to 30°C). It is preferable to carry out initial charge at normal temperature because facilities can be simplified.

A charge current value can be set as desired. When a charge current value is 1C or less, the effect of the present invention is easily obtained. Namely, generation of gas is easily reduced under high temperature environment. It is preferable to set the charge current value to 0.5C or less. The current value may be changed during charging. For example, CC-CV charging may be performed. The 1C capacity may be equal to nominal capacity of the battery.

Thereafter, the temporarily sealed secondary battery initially charged to the above-mentioned negative electrode potential is stored in an atmosphere of 50°C or higher and lower than 80°C.

At this time, water, carbon dioxide, etc. adsorbed mainly on the negative electrode layer are released as gas from the electrode group, and the gas stays in the temporarily sealed battery. Generation of gas that appears to be a decomposition product of the electrolyte solution is also observed. This indicates that some sort of appropriate coating film has been formed on the surface of the negative electrode.

In the case of storing the temporarily sealed secondary battery at an ambient temperature lower than 50°C is not industrially practical as it takes time for water, carbon dioxide, etc. to be released from the electrode group. Moreover, it results in the battery with insufficient high temperature properties because an appropriate coating film would not be formed on the surface of the electrode. In the case of storing the temporarily sealed secondary battery at an ambient temperature equal to or higher than 80°C, the non-aqueous electrolyte tends to react at the surfaces of the positive and negative electrodes. A coating film would therefore be excessively formed, reducing discharge capacity of the battery and reducing the capacity retention to a large extent in a high temperature cycling. The ambient temperature is more preferably in the range of 50 to 70°C.

The temporarily sealed secondary battery may be stored in an atmosphere of 50°C or higher and lower than 80°C for any time period as long as gas is sufficiently released from the negative electrode. This storage period may be, e.g., 5 hours to 10 days, and preferably 1 to 8 days, although it is not limited to this. The storage period may be adjusted according to the species of the positive electrode active material. For example, in the case of using a lithium-transition metal composite oxide as the positive electrode active material, the storage period may be 5 hours to 5 days, and preferably 1 to 4 days. For example, in the case of using lithium iron phosphate as the positive electrode active material, the storage period may be 5 hours to 10 days, and preferably 5 to 8 days. The period between initial charge and the start of high temperature storage is not particularly limited, and may be set as desired.

If the temporarily sealed secondary battery is in an open circuit state during the period of high temperature storage, the negative electrode potential increase due to self-discharge. If the battery is substantially continuously charged during storage so that the battery is stored with a constant potential, the battery capacity decreases significantly after storage. It is therefore preferable not to store the battery with a constant potential. For example, it is preferable not to trickle charge or float charge the battery. In order to compensate for a part of self-discharge capacity, the battery may be intermittently charged with about 10% of the self-discharge amount during the storage. However, it is most preferable that the battery be stored in the open circuit state.

As used herein, the expression "the negative electrode potential of the temporarily sealed secondary battery is adjusted to a potential higher than 0.8 V and equal to or lower than 1.4 V, and the temporarily sealed secondary battery is stored in an atmosphere of 50°C or higher and lower than 80°C" not only means that the negative electrode potential need be retained in this range during the period of high temperature storage, but also includes the case where the negative electrode potential increases to a value out of this potential range during the storage period as long as the charge cut-off potential is in this potential range. The effect of the present invention can be obtained even in this case.

### (Third Step)

Subsequently, a part of the packaging member is cut or a hole is cut in the packaging member to discharge the gas staying in the packaging member in the second step to the outside. For example, the packaging member may be opened by cutting the laminated film at any position in its opening portion that is a non-heat-sealed portion located inside the temporarily sealed portion. It is preferable to open the packaging member under a reduced pressure, and it is preferable to open the packaging member in an inert atmosphere or in dry air.

After the packaging member is opened, the non-aqueous electrolyte secondary battery may be placed under a reduced pressure atmosphere by using a reduced pressure chamber etc., or gas may be sucked from the opened part or the hole of the packaging member by using a suction nozzle. The gas in the packaging member can be more reliably discharged by these methods.

After the gas is discharged, the packaging member is heat sealed at a position inside the cut part of the opening portion to form a final sealed portion, thereby sealing the electrode group and the non-aqueous electrolyte solution again. Moreover, the packaging member is cut at a position outside the final sealed portion to cut off the opening portion. The non-aqueous electrolyte secondary battery is thus produced. At this time, it is preferable to seal the electrode group and the non-aqueous electrolyte solution under a reduced pressure. Alternatively, the electrode group and the non-aqueous electrolyte solution may be sealed by attaching an adhesive tape etc. to a region having the hole in the packaging member.

The non-aqueous electrolyte secondary battery thus produced may be charged and discharged one or more times as desired. The non-aqueous electrolyte secondary battery may further be stored at normal temperature or a high temperature. A conditioning process (the second step or the second and third steps) may be performed a plurality of times.

In the present embodiment, it is preferable that the capacity of the temporarily sealed battery be regulated by the negative electrode when the negative electrode potential is adjusted. The negative electrode potential can thus be reliably adjusted to the above range. This facilitates desorption of adsorbed water, carbon dioxide, etc. during the high temperature storage, and some sort of coating film is formed on the surface of the negative electrode, whereby generation of gas can be reduced. Moreover, since the positive electrode potential can be made not to become too high during the initial charge, degradation of the positive electrode can be reduced. In particular, it is preferable that the ratio of the negative electrode capacity to the positive electrode capacity, R = N/P, satisfy 0.7 ≤ R < 1.0, where P represents actual capacity of the positive electrode, and N represents actual capacity of the negative electrode. Even if R is smaller than 0.7, the effect of the present invention can still be obtained, but discharge capacity as the battery is reduced. The values P, N can be obtained as follows.

The positive electrode and the lithium metal foil which are shaped so as to be used in a coin cell are placed to face each other with a separator therebetween in dry argon. These members are placed in a coin cell, an electrolyte solution is introduced into the coin cell, and the coin cell is sealed with the separator and the electrode being sufficiently impregnated with the electrolyte solution. A solution of 1.0 mol/l of LiPF₆ as an electrolyte in a mixed solvent of ethylene carbonate (EC) and dimethyl carbonate (DMC) with a EC/DMC volume ratio of 1 : 2 is used as the electrolyte solution. The coin cell thus produced is charged with a constant current at 0.25C in a 25°C environment until the cell voltage reaches 4.2 V and is then discharged with a constant current at 0.25C in the 25°C environment until the cell voltage reaches 3.0 V. Capacity at the time of the discharge is divided by the area of a positive active material layer of the coin cell to calculate actual capacity P (mAh/cm²) in the 25°C environment per unit area of the positive electrode. The temperature environment for measurement of the actual capacity is created by using an incubator (IN804 Incubator made by Yamato Scientific Co., Ltd.) etc.

Another coin cell is produced by a method similar to that described above except that the negative electrode shaped so as to be used in the coin cell is used instead of the positive electrode. The coin cell produced is charged with a constant current at 0.25C in a 25°C environment until the cell voltage reaches 1.0 V and is then discharged with a constant current at 0.25C in the 25°C environment until the cell voltage reaches 3.0 V. Capacity at the time of the discharge is divided by the area of a negative active material layer of the coin cell to calculate actual capacity N (mAh/cm²) in the 25°C environment per unit area of the negative electrode. In the measurement of N, charging refers to the case where lithium ions are stored in the active material, and discharging refers to the case where lithium ions are released from the active material.

One cause for gas generation of the non-aqueous electrolyte secondary battery using a titanium composite oxide as a negative electrode active material associated with using under high temperature environment is impurities that are contained in the negative electrode active material. In particular, the titanium composite oxide whose lithium ion storage potential is 1.2 V or higher (versus Li/Li⁺) has adsorbed a slight amount of water, and this water can be decomposed to generate gas. Under high temperature environment, the electrolyte component can be reductively decomposed on the negative electrode to generate gas. However, by performing the step of the present embodiment, the gas released from the negative electrode can be discharged in advance, and some sort of coating film should be formed on the surface of the negative electrode. A non-aqueous electrolyte battery in which generation of gas is reduced even after manufacturing of the battery is thus obtained. Accordingly, a non-aqueous electrolyte battery in which swelling of the battery and a decrease in capacity retention in a high temperature cycling are reduced is obtained. Moreover, the method of the present embodiment reduces degradation of the electrodes and the separator and reduces an increase in impedance. Accordingly, a non-aqueous electrolyte battery that reduces capacity deterioration of the battery is obtained.

The present invention will be specifically described below based on examples.

### Examples

### Experiment 1

### (Example 1)

### <Production of Positive Electrode>

83 wt% of lithium iron phosphate (LiFePO₄) powder as a positive electrode active material, 10 wt% of acetylene black, and 7 wt% of polyvinylidene fluoride (PVdF) were added to N-methylpyrrolidone (NMP) and mixed together to prepare slurry. Both surfaces of a current collector made of aluminum foil and having a thickness of 20 µm were coated with the slurry so that the amount of active material on each surface was 9.5 mg/cm². After the coating, the resultant coated current collector was dried and pressed to a composite density of 1.9 g/cm³ to produce a positive electrode. The positive electrode was then dried under a reduced pressure at 130°C for 8 hours.

### <Production of Negative Electrode>

89.3 wt% of powder of lithium titanium oxide with a spinel structure (Li₄Ti₅O₁₂, lithium storage potential: 1.55 V versus Li/Li⁺, specific surface area: 4.2 m²/g, and average particle size: 1.3 µm) as a negative electrode active material, 4.5 wt% of acetylene black as a conductive material, and 6.2 wt% of polyvinylidene fluoride (PVdF) were added to an N-methylpyrrolidone (NMP) solution and mixed together to prepare slurry. Both surfaces of a current collector made of aluminum foil and having a thickness of 20 µm were coated with the slurry so that the amount of active material on each surface was 8.0 mg/cm². After the coating, the resultant coated current collector was dried and pressed to a composite density of 1.8 to 2.0 g/cm³ to produce a negative electrode. The negative electrode was then dried under a reduced pressure at 130°C for 8 hours.

### <Production of Electrode Group>

The sheet-like positive electrode produced as described above, a separator made of rayon and having a thickness of 50 µm, the sheet-like negative electrode produced as described above, and another separator were sequentially stacked on each other in this order, and the stack was fixed with an insulating tape. After the stack was fixed, a lead tab made of aluminum foil and having a thickness of 20 µm was welded to the current collectors of the positive and negative electrodes. An electrode group thus produced was a flat electrode group having a width of 36 mm and a thickness of 3.9 mm. The electrode group was placed in a packaging member made of a laminated film and was vacuum dried at 80°C for 8 hours.

### <Preparation of Non-Aqueous Electrolyte Solution>

1 mol/l of lithium hexafluorophosphate (LiPF₆) as an electrolyte was dissolved in a mixed solvent of ethylene carbonate (EC) and dimethyl carbonate (DMC) (EC/DMC volume ratio of 1 : 2) to prepare a non-aqueous electrolyte solution.

### <First Step>

As a first step, the electrode group was placed in a packaging member made of a laminated film so that the positive and negative electrode terminals were extended to the outside from one side of the packaging member. The non-aqueous electrolyte was introduced into the packaging member to impregnate the electrode group with the non-aqueous electrolyte. The laminated film was then temporarily sealed by heat sealing to produce a temporarily sealed secondary battery.

Actual capacity P of the positive electrode, and Actural capacity N of the negative electrode used in this temporarily sealed secondary battery were measured by the method described above. P was 1.42 mAh/cm² and N was 1.28 mAh/cm². In this temporarily sealed secondary battery, the ratio R of the negative electrode capacity to the positive electrode capacity (R = N/P) is 0.9, and designed capacity is 440 mAh.

### <Second Step>

As a second step, the temporarily sealed secondary battery was rested for 3 hours, and then a current was applied between the positive and negative electrode terminals to charge the temporarily sealed secondary battery at 0.25 C (110 mA) at normal temperature (25°C) until the negative electrode potential reached 1.0 V. A cell voltage at this time was 2.5 V.

Subsequently, the initially charged temporarily sealed secondary battery was stored in an open circuit state for 168 hours in a 55°C atmosphere (incubator).

As a third step, the temporarily sealed secondary battery was then cooled to an ambient temperature, a part of the laminated film was cut off, and the resultant temporarily sealed secondary battery was placed in a reduced pressure chamber to discharge gas. Thereafter, the cut part of the laminated film was sealed again (finally sealed) by heat sealing.

The temporarily sealed secondary battery was assembled and conditioned in this manner to produce a non-aqueous electrolyte secondary battery having a width of 60 mm, a thickness of 3.9 mm, and a height of 83 mm.

### (Example 2)

A laminated film non-aqueous electrolyte secondary battery was produced by a method similar to that of Example 1 except that the temporarily sealed secondary battery was charged until the negative electrode potential reached 1.2 V in the second step. A cell voltage at this time was 2.3 V.

### (Example 3)

A laminated film non-aqueous electrolyte secondary battery was produced by a method similar to that of Example 1 except that the temporarily sealed secondary battery was charged until the negative electrode potential reached 0.85 V in the second step. A cell voltage at this time was 2.65 V.

### (Example 4)

A laminated film non-aqueous electrolyte secondary battery was produced by a method similar to that of Example 1 except that the storage temperature in the second step was 70°C.

### (Example 5)

A laminated film non-aqueous electrolyte secondary battery was produced by a method similar to that of Example 1 except that the storage period in the second step was 48 hours.

### (Example 6)

A laminated film non-aqueous electrolyte secondary battery was produced by a method similar to that of Example 1 except that the temporarily sealed secondary battery was charged until the negative electrode potential reached 1.4 V in the second step. A cell voltage at this time was 2.1 V.

### (Comparative Example 1)

A laminated film non-aqueous electrolyte secondary battery was produced by a method similar to that of Example 1 except that the temporarily sealed secondary battery was charged at 220 mAh to a state of charge (SOC) of 50% in the second step. At this time, a negative electrode potential was 1.55 V and a cell voltage was 1.9 V.

### (Comparative Example 2)

A laminated film non-aqueous electrolyte secondary battery was produced by a method similar to that of Example 1 except that the temporarily sealed secondary battery was charged at 400 mAh to SOC of 90% in the second step. At this time, a negative electrode potential was 1.55 V and a cell voltage was 1.9 V.

### (Comparative Example 3)

A laminated film non-aqueous electrolyte secondary battery was produced by a method similar to that of Example 1 except that the storage temperature in the second step was 45°C.

### (Comparative Example 4)

Conditioning was performed under the conditions described in Example 1 of Japanese Translation of PCT International Application No. 2010-530122. Specifically, a laminated film non-aqueous electrolyte secondary battery was produced by a method similar to that of Example 1 except for the following. In the second step, the temporarily sealed battery was charged to the cell voltage of 2.5 V, and then stored in an open circuit state at normal temperature for about 16 hours. Thereafter, the battery was placed in a furnace preheated to 80°C, was charged again to 2.5 V in the furnace, and was stored in the furnace for about 5 hours. Subsequently, the battery was removed from the furnace and cooled to an ambient temperature.

### (Comparative Example 5)

A laminated film non-aqueous electrolyte secondary battery was produced by a method similar to that of Example 1 except that the temporarily sealed secondary battery was charged until the negative electrode potential reached 0.5 V in the second step. A cell voltage at this time was 3.0 V.

### <Measurement>

The following measurement was carried out for the non-aqueous electrolyte secondary batteries of Examples 1 to 6 and Comparative Examples 1 to 5 produced as described above.

### <Measurement of Discharge Capacity>

The non-aqueous electrolyte secondary battery was stored in an incubator of 25°C to stabilize the temperature of the battery. Then, the non-aqueous electrolyte secondary battery was discharged to SOC of 0% (1C, cut-off voltage: 1.0 V). The non-aqueous electrolyte secondary battery was rested for 30 minutes, and then was charged with a constant current at 1C to 2.5 V. Thereafter, the non-aqueous electrolyte secondary battery was rested for 30 minutes, and then was discharged at 1C to 1.0 V. The capacity at this time is defined as the discharge capacity. The discharge capacity was measured after conditioning under these conditions. The discharge capacity thus measured is defined as the initial capacity. The result is shown in Table 1.

### <High Temperature Cycle Test>

The non-aqueous electrolyte secondary battery was placed in the incubator of 55°C, and was charged and discharged 150 cycles under the same charge and discharge conditions as those for the measurement of the capacity (charge: 1C, cut-off voltage of 2.5 V, rest: 30 minutes, discharge: 1C, cut-off voltage of 1.0 V, and rest: 30 minutes).

### <Measurement of Amount of Gas>

The non-aqueous electrolyte secondary battery was placed in a graduated cylinder containing 500 ml of water to measure the volume of the battery. The volume of the battery was measured before and after 150 cycles of the high temperature cycle test. The amount of change in volume is defined as the amount of gas generated. The result is also shown in Table 1.

**[Table 1]**

| | Initial Charge Negative Electrode Potential (V) | Initial Charge Cell Voltage (V) | Storage Temperature (°C) | Initial Capacity (mAh) | Amount of Gas Generated (ml) |
|---|---|---|---|---|---|
| Example 1 | 1.0 | 2.5 | 55 | 438 | 0.1 |
| Example 2 | 1.2 | 2.3 | 55 | 434 | 0.2 |
| Example 3 | 0.85 | 2.65 | 55 | 427 | 0.1 |
| Example 4 | 1.0 | 2.5 | 70 | 430 | 0.2 |
| Example 5 | 1.0 | 2.5 | 55 | 435 | 1.5 |
| Example 6 | 1.4 | 2.1 | 55 | 423 | 1.2 |
| Comparative Example 1 | 1.55 | 1.9 | 55 | 439 | >3 |
| Comparative Example 2 | 1.55 | 1.9 | 55 | 436 | >3 |
| Comparative Example 3 | 1.0 | 2.5 | 45 | 435 | >3 |
| Comparative Example 4 | 1.0 | 2.5 | 80 | 334 | 0.2 |
| Comparative Example 5 | 0.5 | 3.0 | 55 | 379 | 0.2 |

As can be seen from Table 1, in Examples 1 to 6, the initial discharge capacity is substantially the same as the designed capacity, and the amount of gas after 150 cycles is 1.5 ml or less, which is much less than Comparative Examples 1 to 3.

In Comparative Examples 1 to 3, the initial discharge capacity is substantially the same as the designed capacity, but the amount of gas after 150 cycles is more than 3 ml. This shows that the negative electrode potential for initial charge need be low to a certain extent and the storage temperature need be high to a certain extent. In Comparative Examples 4 and 5, the amount of gas after 150 cycles was able to be reduced, but the initial discharge capacity was 334 mAh and 379 mAh, respectively, which are much smaller than the designed capacity. This shows that it is not preferable that the negative electrode potential for initial charge be too low and it is not preferable that the storage temperature be too high neither.

The period of high temperature storage is 2 days in Example 5, and 7 days in Example 1, and the amount of gas in Example 1 is smaller than in Example 5. This shows that it is preferable that the period of high temperature storage be about 7 days in the case of using lithium iron phosphate as a positive electrode active material. Moreover, the negative electrode potential for initial charge is 1.4 V in Example 6, and is lower than 1.4 V in Examples 1 to 4, and the amount of gas in Examples 1 to 4 is smaller than in Example 6. This shows that it is more preferable that the negative electrode potential for initial charge be 0.85 to 1.2 V.

### Experiment 2

### (Example 7)

### <Production of Positive Electrode>

Slurry was prepared in a manner similar to that of Example 1 by using lithium manganate (LiMn₂O₄) as a positive electrode active material. One surface of a current collector made of aluminum foil and having a thickness of 20 µm was coated with the slurry so that the amount of active material on the surface was 9.3 mg/cm². After the coating, the resultant coated current collector was dried and pressed to a composite density of 2.9 g/cm³ to produce a positive electrode. The positive electrode was then dried under a reduced pressure at 130°C for 8 hours.

### <Production of Negative Electrode>

4.5 wt% of acetylene black as a conductive material was added to 89.3 wt% of the powder of lithium titanium oxide with a spinel structure used in Experiment 1 as a negative electrode active material and mixed together. Then, 6.2 wt% of polyvinylidene fluoride (PVdF) and N-methylpyrrolidone (NMP) was added to the mixture and mixed together. The resultant mixture was stirred at 2,000 rpm for 3 minutes and defoamed at 2,200 rpm for 30 seconds with a THINKY MIXER. The defoaming was performed twice. Thereafter, the mixture was stirred at 2,000 rpm for 5 minutes, and defoamed at 2,200 rpm for 30 seconds. This time, the defoaming was performed only once. Slurry was prepared in this manner.

Thereafter, one surface of a current collector made of aluminum foil and having a thickness of 20 µm was coated with the prepared composite slurry so that the amount of active material on the surface was 4.3 mg/cm². The resultant coated current collector was dried and then pressed to a composite density of 1.8 to 2.0 g/cm³ to produce a negative electrode. The negative electrode was then dried under a reduced pressure at 130°C for 8 hours.

### <Production of Electrode Group>

The positive electrode produced as described above, a separator made of rayon and having a thickness of 50 µm, the negative electrode produced as described above, and another separator were sequentially stacked on each other in this order so that the coated surfaces of the positive and negative electrodes faced each other with the separator therebetween. Then, the stack was wound into a flat shape so that the positive electrode faced outward, and the stack in the flat shape was fixed with an insulating tape. After the stack was fixed, a lead tab made of aluminum foil and having a thickness of 20 µm was welded to the current collectors of the positive and negative electrodes to produce an electrode group. The electrode group thus produced was placed in a packaging member made of a laminated film and was vacuum dried at 100°C for 12 hours.

### <Preparation of Non-Aqueous Electrolyte Solution>

1 mol/l of lithium hexafluorophosphate (LiPF₆) as an electrolyte and 3 wt% of vinylene carbonate (VC) and 3 wt% of 1,3-propanesultone as additives were dissolved in a mixed solvent of propylene carbonate (PC) and diethyl carbonate (DEC) (PC/DEC volume ratio of 2 : 1) to prepare a non-aqueous electrolyte solution.

### <First Step>

As a first step, the electrode group was placed in a packaging member made of a laminated film so that the positive and negative electrode terminals were extended to the outside from one side of the packaging member. The non-aqueous electrolyte was introduced into the packaging member to impregnate the electrode group with the non-aqueous electrolyte. The laminated film was then temporarily sealed by heat sealing to produce a temporarily sealed secondary battery.

Actual capacity P of the positive electrode, and Actural capacity N of the negative electrode used in this temporarily sealed secondary battery were measured by the method described above. P was 0.78 mAh/cm² and N was 0.69 mAh/cm². In this temporarily sealed secondary battery, the ratio R of the negative electrode capacity to the positive electrode capacity (R = N/P) is 0.9, and designed capacity is 40 mAh.

### <Second Step>

As a second step, the temporarily sealed secondary battery was rested for 3 hours, and then a current was applied between the positive and negative electrode terminals to charge the temporarily sealed secondary battery at 0.25 C (10 mA) at 25°C until the negative electrode potential reached 1.2 V. A cell voltage at this time was 3.0 V.

Subsequently, the initially charged temporarily sealed secondary battery was stored in an open circuit state for 48 hours in an incubator of 55°C.

As a third step, the temporarily sealed secondary battery stored was then cooled to an ambient temperature, a part of the laminated film was cut off, and the resultant temporarily sealed secondary battery was placed in a reduced pressure chamber to discharge gas. Thereafter, the cut part of the laminated film was sealed again (finally sealed) by heat sealing.

A non-aqueous electrolyte secondary battery having discharge capacity of 40 mAh was produced in this manner.

### (Comparative Example 6)

A non-aqueous electrolyte secondary battery was produced by a method similar to that of Example 7 except that the battery was charged under the conditions described in Japanese Unexamined Patent Application Publication No. 2012-79561, namely the battery was charged at 6 mAh to SOC of 15%, in the second step. At this time, a negative electrode potential was 1.55 V and a cell voltage was 2.3 V.

### (Comparative Example 7)

A non-aqueous electrolyte secondary battery was produced by a method similar to that of Example 7 except that the storage temperature in the second step was 25°C.

### (Comparative Example 8)

A non-aqueous electrolyte secondary battery was produced by a method similar to that of Example 7 except that the storage temperature in the second step was 45°C.

### (Comparative Example 9)

A non-aqueous electrolyte secondary battery was produced by a method similar to that of Example 7 except that the battery was charged and stored in the second step under the conditions described in Re-publication of PCT International Publication No. WO2007/06406, namely the battery was charged until the negative electrode potential reached 0.4 V (a cell voltage at this time was 3.8 V) and the battery was stored at 25°C.

### (Comparative Example 10)

A non-aqueous electrolyte secondary battery was produced by a method similar to that of Comparative Example 9 except that the storage temperature in the second step was 45°C.

### (Comparative Example 11)

A non-aqueous electrolyte secondary battery was produced by a method similar to that of Comparative Example 9 except that the storage period in the second step was 168 hours.

### (Comparative Example 12)

A non-aqueous electrolyte secondary battery was produced by a method similar to that of Comparative Example 10 except that the storage period in the second step was 168 hours.

### <Measurement>

Measurement was carried out for the non-aqueous electrolyte secondary batteries of Example 7 and Comparative Examples 6 to 12 produced as described above. The measurement was carried out in a manner similar to that of Experiment 1 except that the charge and discharge cut-off voltages used in the measurement of initial discharge capacity and the high temperature cycle test were 3.0 V and 1.4 V, and a graduated cylinder containing 100 ml of water was used for the measurement of the amount of gas. The result is shown in Table 2.

**[Table 2]**

| | Initial Charge Negative Electrode Potential (V) | Initial Charge Cell Voltage (V) | Storage Temperature (°C) | Initial Capacity (mAh) | Amount of Gas Generated (ml) |
|---|---|---|---|---|---|
| Example 7 | 1.2 | 3.0 | 55 | 37 | 0.3 |
| Comparative Example 6 | 1.55 | 2.3 | 55 | 38 | >1 |
| Comparative Example 7 | 1.2 | 3.0 | 25 | 38 | >1 |
| Comparative Example 8 | 1.2 | 3.0 | 45 | 37 | >1 |
| Comparative Example 9 | 0.4 | 3.8 | 25 | 32 | >1 |
| Comparative Example 10 | 0.4 | 3.8 | 45 | 31 | >1 |
| Comparative Example 11 | 0.4 | 3.8 | 25 | 33 | >1 |
| Comparative Example 12 | 0.4 | 3.8 | 45 | 32 | >1 |

As can be seen from Table 2, in Example 7, the initial discharge capacity is substantially the same as the designed capacity, and the amount of gas after 150 cycles is 0.3 ml, which is much less than Comparative Examples 6 to 12.

In Comparative Examples 6 to 8, the initial discharge capacity is substantially the same as the designed capacity, but the amount of gas after 150 cycles is more than 1 ml. Experiment 2 using a different species of the positive electrode active material from Experiment 1 also shows that the negative electrode potential for initial charge need be low to a certain extent and the storage temperature need be high to a certain extent. In Comparative Examples 9 to 12, the amount of gas after 150 cycles was not able to be reduced, and the initial discharge capacity was much smaller than the designed capacity. Experiment 2 using a different species of the positive electrode active material from Experiment 1 also shows that it is not preferable that the negative electrode potential for initial charge be too low.

### Experiment 3

### (Example 8)

### <Production of Positive Electrode>

Powder of a lithium nickel manganese cobalt composite oxide (LiNi_{1/3}Mn_{1/3}Co_{1/3}O₂) as a positive electrode active material, acetylene black, and a solution of polyvinylidene fluoride (PVdF) in N-methylpyrrolidone (NMP) were mixed so that a mass ratio of LiNi_{1/3}Mn_{1/3}Co_{1/3}O₂ : acetylene black : PVdF was 92 : 4 : 4, and NMP was added to the mixture to prepare positive electrode composite slurry. Both surfaces of a current collector made of aluminum foil and having a thickness of 20 µm was coated with the positive electrode composite slurry so that the amount of active material on each surface was 9.8 mg/cm². After the coating, the resultant coated current collector was dried and pressed a composite density of 2.5 g/cm³ to produce a positive electrode. The positive electrode was then dried under a reduced pressure at 130°C for 8 hours.

### <Production of Negative Electrode>

Powder of lithium titanium oxide having a spinel structure (Li₄Ti₅O₁₂, lithium storage potential: 1.55 V versus Li/Li⁺, specific surface area: 10.9 m²/g, average secondary particle size: 7.4 µm, and average primary particle size: 0.8 µm) as a negative electrode active material, acetylene black, and a solution of polyvinylidene fluoride (PVdF) in N-methylpyrrolidone (NMP) were mixed so that a mass ratio of Li₄Ti₅O₁₂: acetylene black : PVdF was 87.0 : 4.3 : 8.7, and NMP was added to the mixture to prepare negative electrode composite slurry. Both surfaces of a current collector made of aluminum foil and having a thickness of 20 µm was coated with this slurry so that the amount of active material on each surface was 8.0 mg/cm². After the coating, the resultant coated current collector was dried and pressed to a composite density of 1.8 to 2.0 g/cm³ to produce a negative electrode. The negative electrode was then dried under a reduced pressure at 130°C for 8 hours. The average secondary particle size of the active material was measured by laser diffractometry (laser diffraction/scattering type particle size distribution measuring apparatus LA-950 made by HORIBA, Ltd.), and the average primary particle size thereof was obtained by electron microscopy (scanning electron microscope S-4800 made by Hitachi High-Technologies Corporation, the average of 100 primary particles). The specific surface area of the active material was measured by a single-point BET method using nitrogen adsorption by using a specific surface area measuring apparatus (Monosorb made by Quantachrome Instruments).

### <Production of Electrode Group>

The sheet-like positive electrode, a separator made of rayon and having a thickness of 50 µm, the negative electrode produced as described above, and another separator were sequentially stacked on each other in this order, and the stack was fixed with an insulating tape. After the stack was fixed, a lead tab made of aluminum foil and having a thickness of 20 µm was welded to the current collectors of the positive and negative electrodes. An electrode group thus produced was a flat electrode group having a width of 36 mm and a thickness of 3.9 mm.

### <Preparation of Non-Aqueous Electrolyte>

1 mol/l of lithium hexafluorophosphate (LiPF₆) and 0.2 mol/l of lithium tetrafluoroborate (LiBF₄) as lithium salts were dissolved in a mixed solvent of ethylene carbonate (EC), propylene carbonate (PC), and ethyl methyl carbonate (MEC) (EC/PC/MEC volume ratio of 10 : 30 : 60) to prepare a non-aqueous electrolyte solution.

### <First Step>

As a first step, the electrode group produced as described above was placed in a packaging member made of a laminated film so that the positive and negative electrode terminals were extended to the outside from one side of the packaging member. The resultant packaging member was vacuum dried at 80°C for 8 hours. The non-aqueous electrolyte solution was introduced into the packaging member to impregnate the electrode group with the non-aqueous electrolyte solution. An opening of the laminated film was then temporarily sealed by heat sealing to produce a temporarily sealed secondary battery.

Actual capacity P of the positive electrode, and Actural capacity N of the negative electrode used in this temporarily sealed secondary battery were measured by the method described above. P was 1.42 mAh/cm² and N was 1.33 mAh/cm². In this temporarily sealed secondary battery, the ratio of the negative electrode capacity to the positive electrode capacity, R = N/P, is therefore 0.94, and designed capacity is 400 mAh.

### <Second Step>

As a second step, the temporarily sealed secondary battery was sandwiched between two holding plates and fixed with a clip. The temporarily sealed secondary battery was thus pressed and left in this state for 3 hours. Thereafter, a current was applied between the positive and negative electrode terminals to charge the temporarily sealed secondary battery at 0.25 C (100 mA) at normal temperature (25°C) until the negative electrode potential reached 1.0 V. A cell voltage at this time was 3.1 V.

Subsequently, the initially charged temporarily sealed secondary battery was stored in an open circuit state for 168 hours in a 55°C atmosphere (incubator).

As a third step, the temporarily sealed secondary battery was then cooled to an ambient temperature, a part of the laminated film was cut off, and the resultant temporarily sealed secondary battery was placed in a reduced pressure chamber to discharge gas. Thereafter, the cut part of the laminated film was sealed again (finally sealed) by heat sealing. The temporarily sealed secondary battery was assembled and conditioned in this manner to produce a non-aqueous electrolyte secondary battery of Example 8 having a width of 60 mm, a thickness of 3.9 mm, and a height of 83 mm.

### <Measurement>

The following measurement was carried out for the non-aqueous electrolyte secondary battery of Example 8 produced as described above.

### <Measurement of Discharge Capacity>

The non-aqueous electrolyte secondary battery was stored in an incubator of 25°C to stabilize the temperature of the battery. Then, the non-aqueous electrolyte secondary battery was discharged to SOC of 0% (1C, cut-off voltage: 1.4V). The non-aqueous electrolyte secondary battery was rested for 30 minutes, and then was charged with a constant current at 1C to 3.1 V. Thereafter, the non-aqueous electrolyte secondary battery was rested for 30 minutes, and then was discharged at 1C to 1.4 V. The capacity at this time is defined as the discharge capacity. The discharge capacity was measured after conditioning under these conditions. The discharge capacity thus measured is defined as the initial capacity.

### <High Temperature Cycle Test>

The non-aqueous electrolyte secondary battery was placed in the incubator of 55°C, and was charged and discharged 500 cycles under the same charge and discharge conditions as those for the measurement of the capacity (charge: 1C, cut-off voltage of 3.1 V, rest: 30 minutes, discharge: 1C, cut-off voltage of 1.4 V, and rest: 30 minutes). After the 500 cycles, the measurement of the discharge capacity was carried out again to obtain the capacity after the cycles, and the discharge capacity retention (= capacity after the cycles/initial capacity) was calculated. The result is shown in Table 3.

**[Table 3]**

| | Initial Charge Negative Electrode Potential (V) | Initial Charge Cell Voltage (V) | Storage Temperature (°C) | Initial Capacity (mAh) | Amount of Gas Generated (ml) |
|---|---|---|---|---|---|
| Example 8 | 1.0 | 3.1 | 55 | 389 | 1.0 |

As can be seen from Table 3, even if the lithium nickel manganese cobalt composite oxide is used as the positive electrode active material, the initial discharge capacity is substantially the same as the designed capacity, and the amount of gas after 500 cycles is small.

### Experiment 4

### (Example 9)

A non-aqueous electrolyte secondary battery was produced by a method similar to Example 7 except that a titanic acid compound (H₂Ti₁₂O₂₅, lithium storage potential: 1.55 V versus Li/Li⁺) disclosed in Japanese Unexamined Patent Application Publication No. 2008-25500 was used as a negative electrode active material and the storage period in the second step was 168 hours.

### (Comparative Example 13)

A non-aqueous electrolyte secondary battery was produced by a method similar to Example 9 except that the storage temperature was 25°C.

### <Measurement>

Various kinds of measurement were carried out by a method similar to that of Experiment 2 for the non-aqueous electrolyte secondary batteries of Example 9 and Comparative Example 13 produced as described above. The result is shown in Table 4.

**[Table 4]**

| | Initial Charge Negative Electrode Potential (V) | Initial Charge Cell Voltage (V) | Storage Temperature (°C) | Initial Capacity (mAh) | Amount of Gas Generated (ml) |
|---|---|---|---|---|---|
| Example 9 | 1.2 | 3.0 | 55 | 36 | 0.2 |
| Comparative Example 13 | 1.2 | 3.0 | 25 | 37 | >1 |

As can be seen from Table 4, even if a titanium composite oxide other than spinel lithium titanate is used as the negative electrode active material, initial discharge capacity substantially the same as the designed capacity is obtained and the amount of gas after 150 cycles is significantly reduced by conditioning the battery at a specific negative electrode potential and a specific storage temperature.

Although some embodiments of the present invention are described above, these embodiments are shown by way of example only and are not intended to limit the scope of the invention. These novel embodiments can be carried out in various other forms, various eliminations, replacement, and modifications can be made without departing from the spirit and scope of the invention. These embodiments and modifications thereof are included in the spirit and scope of the invention, and included in the invention described in claims and in the scope equivalent thereto.

### Industrial Applicability

A non-aqueous electrolyte secondary battery that uses a titanium composite oxide as a negative electrode active material and that can be used under high temperature environment can be obtained according to the present invention. The non-aqueous electrolyte secondary battery of the present invention can therefore be used for various known applications. Specific examples of the applications include a notebook computer, a pen input computer, a mobile computer, an electronic book player, a mobile phone, mobile fax machine, a mobile copier, a mobile printer, a headphone stereo player, a camcorder, a liquid crystal display television, a portable cleaner, a portable CD player, a MiniDisc player, a handheld transceiver, an electronic organizer, a calculator, a memory card, a portable cassette tape recorder, a radio, a backup power supply, a motor, a car, a motorbike, a moped, a bicycle, a lighting apparatus, a toy, a game system, a clock, a power tool, an electronic flash, a camera, a power source for load leveling, and a power source for natural energy storage.

### Reference Signs List

- 1: Non-Aqueous Electrolyte Secondary Battery
- 2: Positive Electrode
- 2a: Positive Electrode Current Collector
- 2b: Positive Electrode active material Layer
- 3: Negative Electrode
- 3a: Negative Electrode Current Collector
- 3b: Negative Electrode active material Layer
- 4: Separator
- 5: Non-Aqueous Electrolyte Solution
- 6: Packaging Member
- 7: Positive Electrode Terminal
- 8: Negative Electrode Terminal

## Claims

1. A method for manufacturing a non-aqueous electrolyte secondary battery including a positive electrode, a negative electrode that includes an active material containing a titanium composite oxide having a lithium ion storage potential of 1.2 V or higher (versus Li/Li⁺), and a non-aqueous electrolyte solution, comprising the steps of
temporarily sealing an opening of a packaging member containing said positive electrode, said negative electrode, and said non-aqueous electrolyte solution to produce a temporarily sealed secondary battery;
adjusting a negative electrode potential of said temporarily sealed secondary battery to a potential higher than 0.8 V and equal to or lower than 1.4 V (versus Li/Li⁺) and storing said temporarily sealed secondary battery in an atmosphere of 50°C or higher and lower than 80°C; and
opening said temporarily sealed secondary battery to discharge gas therefrom, and then finally sealing said packaging member.

2. The method according to claim 1, wherein
said storage of said temporarily sealed secondary battery is performed in an open circuit.

3. The method according to claim 1 or 2, wherein
said titanium composite oxide is selected from lithium titanate with a spinel structure, lithium titanate with a ramsdellite structure, and a monoclinic titanium composite oxide.

4. The method according to any one of claims 1 to 3, wherein
said titanium composite oxide is selected from Li₄₊ₓTi₅O₁₂, Li₂₊ₓTi₃O₇, a titanic acid compound given by a general formula H₂TiₙO₂ₙ₊₁, and bronze titanium oxide (where 0 ≤ x ≤ 3 and n is an even number of 4 or more).

5. The method according to any one of claims 1 to 4, wherein
capacity of said temporarily sealed secondary battery is regulated by said negative electrode when said negative electrode potential is adjusted.

6. The method according to any one of claims 1 to 5, wherein
said non-aqueous electrolyte solution contains ethylene carbonate as a solvent and/or at least one selected from vinylene carbonate, 1,3-propanesultone, and ethylene sulfite as an additive.

7. The method according to any one of claims 1 to 6, wherein
an active material of said positive electrode is lithium iron phosphate.

8. The method according to claim 7, wherein
a cell voltage of said temporarily sealed secondary battery is adjusted to 2.1 to 2.7 V.

9. The method according to any one of claims 1 to 6, wherein
an active material of said positive electrode is a lithium manganese composite oxide with a spinel structure.

10. The method according to claim 9, wherein
a cell voltage of said temporarily sealed secondary battery is adjusted to 2.8 to 3.4 V.

11. The method according to any one of claims 1 to 6, wherein
an active material of said positive electrode is a lithium nickel manganese cobalt composite oxide.

12. The method according to claim 11, wherein
a cell voltage of said temporarily sealed secondary battery is adjusted to 2.7 to 3.3 V.

13. A non-aqueous electrolyte secondary battery manufactured by said method according to any one of claims 1 to 12.
